# EUROPEAN PATENT SPECIFICATION

(11) **EP 2 071 218 B1**
(45) Date of publication and mention of the grant of the patent: **27.02.2013**
(21) Application number: 08171348.9
(22) Date of filing: 11.12.2008
(51) Int. Cl.: F16K 15/14

(54) **Shock absorber with check valve**
Stossdämpfer mit Rückschlagventil
Amortisseur avec clapet de retenue

(30) Priority: 12.12.2007 JP 2007320588
(43) Date of publication of application: 17.06.2009
(73) Proprietor: NOK Corporation, Minato-ku Tokyo 105-8585 (JP)
(72) Inventor: Ozawa, Kentaro, Fukushima-shi, Fukushima 960-1193 (JP)
(74) Representative: TBK

(56) References cited:
- EP-A1- 1 793 146
- JP-A- 11 210 803
- US-A1- 2002 079 650
- US-B1- 6 474 652

## Description

### BACKGROUND OF THE INVENTION

### Field of the Invention

The present invention relates to a shock absorber with a check valve.

### Description of the Related Art

In various devices such as hydraulic equipment, a check valve to allow a fluid such as oil to flow only in one direction by preventing a back flow thereof may be used. In a shock absorber, a check valve (also called a check lip) is provided in an oil seal to secure oil pressure and at the same time, to secure lubrication in the oil seal.

The check valve is constructed so that when a pressure in one area increases, the valve opens to allow a fluid to flow out, but when the pressure in the other area increases, the valve can remain closed to prevent the fluid from flowing from the other area to the one area.

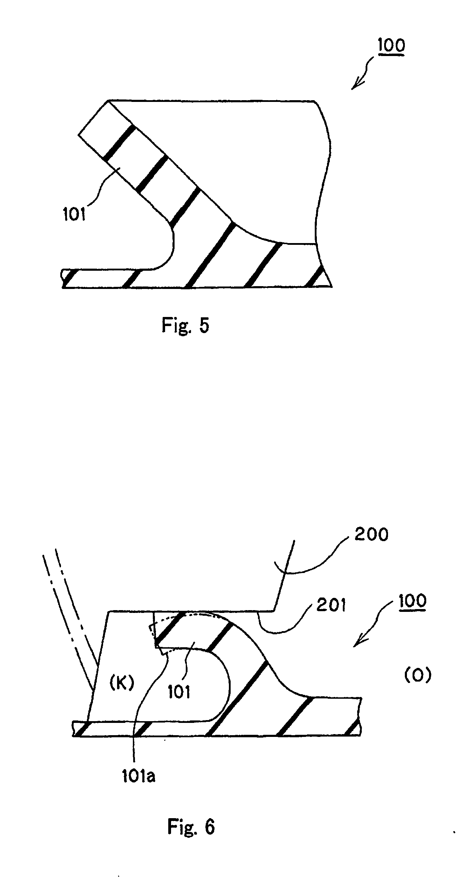

A check valve according to a conventional example will be described with reference to FIGS. 5 and 6. FIG. 5 is a schematic sectional view of a check valve according to the conventional example. FIG. 6 is a schematic sectional view showing a usage state of the check valve according to the conventional example.

A check valve 100 according to the conventional example has a lip 101 functioning as a valve body. The lip 101 extends from one area (O) to the other area (K) and is constructed so as to be in contact with a surface (opposed face 201) of a member 200 provided at a position opposite to the check valve 100. Moreover, as shown in FIG. 6, the lip 101 is constructed so as to be in surface contact with the opposed face 201 in a state in which the tip of the lip 101 is bent to the side of the other area (K). In the conventional example, oil is sealed up in one area (O).

Then, when the pressure in one area (O) increases so that a differential pressure of the pressure in one area (O) with respect to that on the other area (K) becomes large, the lip 101 is deformed like further being bent (See a lip 101a shown by a dotted line in FIG. 6) to open the valve. Accordingly, a portion of oil flows out to the other area (K) and when the differential pressure becomes smaller, the lip 101 is restored to its original state to close the valve. On the other hand, even if the pressure in the other area (K) increases, the valve remains closed, resulting in only higher adhesion of the lip 101 to the opposed face 201.

The check valve 100 constructed as described above is required that the valve be opened reliably under desired pressure. Thus, a step of lowering rigidity of the lip 101 may be taken by making the thickness of the lip 101 thinner to improve responsiveness of opening and closing of the lip 101. However, in such a case, due to lower rigidity of the lip 101, the surface of the lip 101 is more likely to be stuck to the opposed face 201, making behavior of the lip 101 more unstable. Moreover, if rigidity of the lip 101 is made too low, there is a danger that the lip 101 is inverted to the one area (O) when the pressure in the other area (K) increases.

Another step is to reduce the contact area of the lip by forming a projection or groove on the surface of the lip. However, the conventional example adopts a structure to secure a portion that is brought into surface contact for the prevention of a back flow and there still remain unsolved problems as a step against the lip being stuck.

Shock absorbers are used in an automobile and are required that the valve of a check valve be opened at lower pressure in order to improve the riding comfort. As a result, the above problems are becoming marked.

Related technologies include those disclosed in Japanese Patent Application Laid-Open No. 11-108101, Japanese Patent Application Laid-Open No. 11-210803, and Japanese Utility Model Application Laid-Open No. 5-3739.

An object of the present invention is to provide a shock absorber having a check valve with improved responsiveness when the valve opens.

### SUMMARY OF THE INVENTION

The present invention adopts a means described below to solve the above problems.

Namely, a shock absorber according to the present invention is defined in claim 1.

According to the present invention, a satin finish is given to the whole area of the lip that could be brought into contact with the opposed face and thus, the lip can be inhibited from being stuck to the opposed face. Therefore, even if rigidity of the lip is set lower, responsiveness of opening of the valve can be improved.

While concavities and convexities are formed on the surface of the lip if a satin finish is given to the surface of the lip, individual concavities are formed independently. Thus, even if a satin finish is given to the surface of the lip that comes into contact with the opposed face, a portion communicatively connected from one area to the other area will not be formed and therefore, a state in which one area is blocked from the other area can be maintained. That is, prevention of a back flow is not affected.

Here, a difference of elevation of concavities and convexities obtained by the satin finish is preferably set to 0.5 µm or more and 500 µm or less.

Also, a shock absorber according to the present invention is defined in claim 3.
Grid-like convexities are provided to the whole area of a surface of the lip that could be brought into contact with the opposed face. Here, the shape of "grid" is not limited to square and may be rectangle or rhomboid. The present invention also includes other shapes than quadrangle such as circle, as the shape of "grid".

According to the present invention, grid-like convexities are provided to the whole area of the lip that could be brought into contact with the opposed face and thus, the lip can be inhibited from being stuck to the opposed face. Therefore, even if rigidity of the lip is set lower, responsiveness of opening of the valve can be improved.

Moreover, individual grids (concaved portions surrounded by convexities) are independent. Thus, even if grid-like convexities are provided to the surface of the lip that comes into contact with the opposed face, a portion communicatively connected from one area to the other area will not be formed and therefore, a state in which one area is blocked from the other area can be maintained. That is, prevention of a back flow is not affected.

According to the present invention, as described above, responsiveness of opening of the valve can be improved.

### BRIEF DESCRIPTION OF THE DRAWINGS

FIG. 1 is a schematic sectional view showing a usage state of a check valve according to an embodiment of the present invention;
FIG. 2 is a schematic sectional view of the check valve according to a first embodiment of the present invention;
FIG. 3 is a schematic sectional view of the check valve according to a second embodiment of the present invention;
FIG. 4 is a schematic sectional view of the check valve according to the second embodiment of the present invention;
FIG. 5 is a schematic sectional view of the check valve according to a conventional example; and
FIG. 6 is a schematic sectional view showing a usage state of the check valve according to the conventional example.

### DETAILED DESCRIPTION OF THE PREFERRED EMBODIMENTS

### (First embodiment)

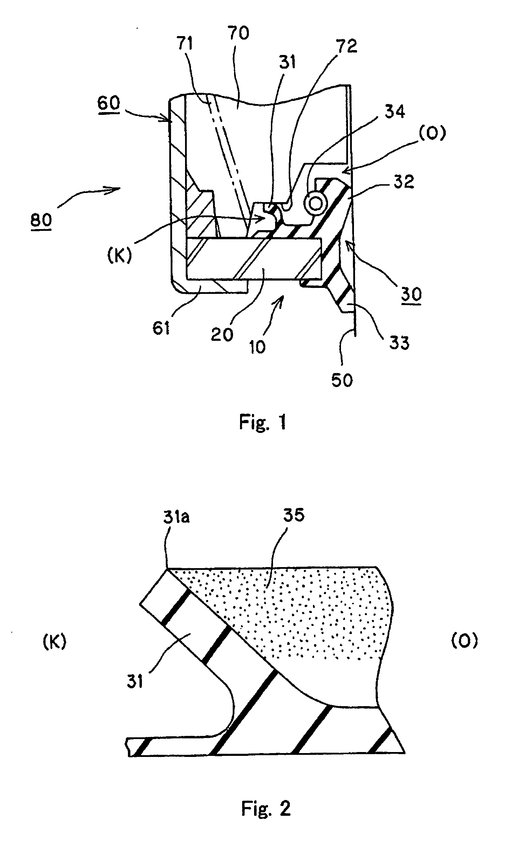

A check valve according to the first embodiment of the present invention will be described with reference to FIGS. 1 and 2. FIG. 1 is a schematic sectional view showing a usage state of a check valve according to an embodiment of the present invention. FIG. 2 is a schematic sectional view of the check valve according to the first embodiment of the present invention.

### <Shock absorber to which an oil seal including a check valve is applied>

A shock absorber to which an oil seal including a check valve is applied will be described particularly with reference to FIG. 1.

An oil seal 10 according to the present embodiment is to be applied to a shock absorber 80. The shock absorber 80 includes a piston 50 performing a reciprocating motion, a substantially cylindrical case 60, and a guide member 70 fixed inside the case 60 to guide movement of the piston 50. In addition, the oil seal 10 is fixed to an end of the case 60 to form an area in which oil is sealed (one area (O)).

According to the shock absorber 80 constructed as described above, when an end (or a member (not shown) fixed to the end) of the piston 50 receives a shock, the piston 50 moves to the side of sealed area so that the shock can be absorbed by oil pressure (internal pressure in the area in which oil is sealed).

### <Oil seal>

The oil seal 10 will be described in detail particularly with reference to FIG. 1. The oil seal 10 according to the present embodiment has a function to prevent oil leakage (an original function of an oil seal) and that of a check valve. Moreover, the oil seal 10 according to the present embodiment includes a reinforcement ring 20 and a seal body 30 which is integrally formed on the inner circumference of the reinforcement ring 20 and made of a rubber-like elastic body.

The reinforcement ring 20 is fixed with the vicinity of an outer circumferential end thereof being sandwiched between an inward flange 61 provided at the end of the case 60 and the guide member 70.

The seal body 30 includes a main lip 32 freely slidingly in contact with the surface of the piston 50 to prevent oil leakage and a dust lip 33 freely slidingly in contact with the surface of the piston 50 to prevent foreign matter such as dust from penetrating into the seal body 30. The main lip 32 has a spring 34 to press the tip of the main lip 32 against the surface of the piston 50 fitted on the outer circumference thereof.

In addition, in the present embodiment, the seal body 30 is provided with a lip 31 to display the function as a valve of the check valve. The case 60 is internally divided by the lip 31 into the aforementioned one area (O) in which oil is sealed and the other area (K).

### <Check valve>

The lip 31 to function as a (valve of) check valve will be described further in detail with reference to FIGS. 1 and 2.

The tip of the lip 31 is constructed so as to be inclined from one area (O) toward the other area (K). Then, when incorporated in the shock absorber 80, the lip 31 is in contact with an opposed face 72 (an end face of the guide member 70) provided at a position opposite to the lip 31 functioning as a (valve of) check valve. At this point, the lip 31 is constructed so as to be in contact with the opposed face 72 in such a way that the tip of the lip 31 is bent to the side of the other area (K).

A large number of minute concavities and convexities 35 formed by a satin finish being given are provided in an area ranging from a lip tip 31a to the vicinity of the root of the lip on the surface of the lip 31 on the one area (0) side. Accordingly, the minute concavities and convexities 35 obtained by the satin finish are provided in the whole area of the lip 31 that could be brought into contact with the opposed face 72. The difference of elevation of the concavities and convexities 35 may be set to 0.5 µm or more and 500 µm or less, preferably to 5 µm or more and 40 µm or less.

According to the lip 31 constructed as described above, when the pressure in one area (O) increases so that a differential pressure of the pressure in one area (O) with respect to that on the other area (K) becomes large, the lip 31 is deformed like further being bent. Accordingly, the lip 31 moves away from the opposed face 72, creating a space between the lip 31 and the opposed face 72. Namely, the valve opens. Thus, a portion of oil flows out to the other area (K). Then, when the differential pressure decreases, the lip 31 is restored to its original state to close the valve. On the other hand, even if the pressure in the other area (K) increases, the valve remains closed, resulting in only higher adhesion of the lip 31 to the opposed face 72.

The oil that flows out to the other area (K) is brought back to the upper side of the piston 50 in FIG. 1 through a communicating path 71 provided to the guide member 70.

### <Advantages of the present embodiment>

According to a check valve in the present embodiment, as described above, a satin finish is given to the whole area of the lip 31 that could be brought into contact with the opposed face 72 (a large number of minute concavities and convexities 35 are formed) and thus, the lip 31 can be inhibited from being stuck to the opposed face 72. Accordingly, even if rigidity of the lip 31 is set lower, responsiveness when the valve opens can be improved.

Therefore, by making the thickness of the lip 31 thinner to the extent that the lip 31 is not inverted to the one area (O) by the pressure in the other area (K), rigidity of the lip 31 can be set as low as possible. Accordingly, even if the pressure at which the valve opens is set to a low value, responsiveness of opening of the valve can be improved while preventing inversion of the lip 31.

When a satin finish is given to the surface of the lip 31, the concavities and convexities 35 are formed on the surface of the lip 31. However, individual concavities are formed independently. Thus, even if a satin finish is given to the surface of the lip 31 that comes into contact with the opposed face 72, a portion communicatively connected from one area (O) to the other area (K) will not be formed. Therefore, a state in which one area (O) is blocked from the other area (K) can be maintained. That is, prevention of a back flow is not affected.

### (Second embodiment)

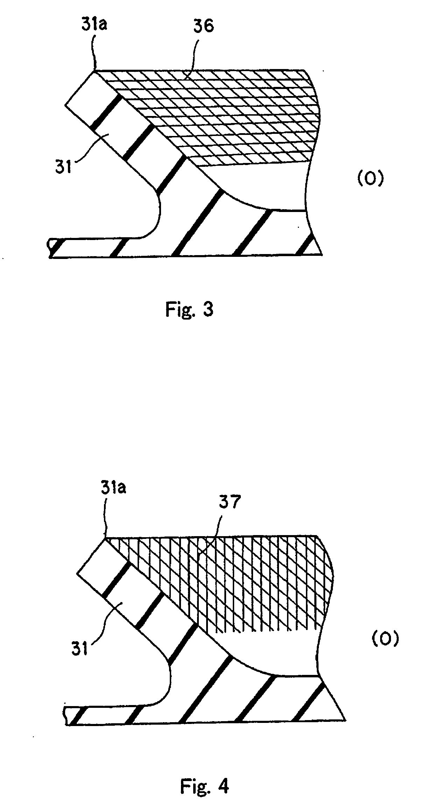

FIGS. 3 and 4 show the second embodiment. In the first embodiment, a structure of providing a large number of minute concavities and convexities by giving a satin finish to the surface of a lip is shown. In the present embodiment, a structure when grid-like convexities are provided to the surface of the lip is shown. Other structures and operations are the same as those of the first embodiment and thus, a description of the same component is omitted when appropriate.

FIGS. 3 and 4 show schematic sectional views of the check valve according to the second embodiment of the present invention. The check valve (lip) shown in FIG. 3 and that shown in FIG. 4 are different only in grid shape.

The basic structure of the lip 31 in the present embodiment is the same as that of the lip 31 shown in the first embodiment. The lip 31 in the present embodiment is different from that in the first embodiment only in that grid-like convexities 36 and 37 are provided in an area ranging from the lip tip 31a to the vicinity of the root of the lip on the surface on the one area (O) side. Accordingly, the grid-like convexities 36 or the grid-like convexities 37 are provided to the whole area of the lip 31 that could be brought into contact with the opposed face 72.

While the grid shape of the convexities 36 of the example shown in FIG. 3 is square, that of the convexities 37 of the example shown in FIG. 4 is rhomboidal. The grid shape can take, as these examples show, a suitable shape. The height, area of one grid and the like of the convexities 36 and 37 may be suitably set according to an environment of use (such as the oil pressure and oil type (viscosity)).

Also in the present embodiment, as described above, the grid-like convexities 36 and 37 are provided on the whole area of the lip 31 that could be brought into contact with the opposed face 72 and thus, the lip 31 can be inhibited from being stuck to the opposed face 72. Therefore, the same operation effect as that in the first embodiment can be achieved.

Individual grids (concaved portions surrounded by convexities) are independent. Thus, even if grid-like convexities 36 and 37 are provided to the surface of the lip 31 that comes into contact with the opposed face 72, a portion communicatively connected from one area (O) to the other area (K) will not be formed. Therefore, a state in which one area (O) is blocked from the other area (K) can be maintained. That is, prevention of a back flow is not affected.

## Claims

1. A shock absorber having
a piston (50) performing a reciprocating motion,
a case (60),
a guide member (70), and
an oil seal (10) fixed to an end of the case (60) to form an area in which oil is sealed;
wherein said oil seal (10) comprises a seal body (30);
wherein said seal body (30) comprises a main lip (32) and a dust lip (33) for sliding in contact with a surface of said piston (50), and a check valve lip (31) in contact with an opposed face (72) of said guide member (70) provided at a position opposite to the check valve lip (31),
wherein the check valve lip (31) is constructed so as to be in contact with the opposed face (72) in such a way that a tip (31a) of the check valve lip (31) is bent and a satin finish is given to the whole area of a surface of the check valve lip (31) that could be brought into contact with the opposed face (72).

2. A shock absorber according to claim 1 wherein a difference of elevation of concavities and convexities (35) obtained by the satin finish is set to 0.5 µm or more and 500 µm or less.

3. A shock absorber having
a piston (50) performing a reciprocating motion,
a case (60),
a guide member (70), and
an oil seal (10) fixed to an end of the case (60) to form an area in which oil is sealed;
wherein said oil seal (10) comprises a seal body (30);
wherein said seal body (30) comprises a main lip (32) and a dust lip (33) for sliding in contact with a surface of said piston (50), and a check valve lip (31) in contact with an opposed face (72) of said guide member (70) provided at a position opposite to the check valve lip (31),
wherein the check valve lip (31) is constructed so as to be in contact with the opposed face (72) in such a way that a tip (31a) of the check valve lip (31) is bent and grid-like convexities are provided to the whole area of a surface of the check valve lip (31) that could be brought into contact with the opposed face (72).

## Patentansprüche

1. Stoßdämpfer mit
einem Kolben (50), der eine hin- und hergehende Bewegung ausführt,
einem Gehäuse (60),
einem Führungselement (70), und
einer Öldichtung (10), die an einem Ende des Gehäuses (60) fixiert ist, um einen Bereich auszubilden, in welchem Öl abgedichtet wird;
wobei die Öldichtung (10) einen Dichtungskörper (30) aufweist; wobei der Dichtungskörper (30) eine Hauptlippe (32) und eine Staublippe (33) für ein Gleiten in Kontakt mit einer Fläche des Kolbens (50) und eine Rückschlagventillippe (31) in Kontakt mit einer gegenüberstehenden Fläche (72) des Führungselementes (70), die an einer Position vorgesehen ist, die der Rückschlagventillippe (31) gegenübersteht, aufweist,
wobei die Rückschlagventillippe (31) so aufgebaut ist, dass sie mit der gegenüberstehenden Fläche (72) in einer derartigen Weise in Kontakt steht, dass ein Endstück (31a) der Rückschlagventillippe (31) gebogen ist, und eine Satinoberfläche einem gesamten Bereich einer Fläche der Rückschlagventillippe (31) verliehen ist, die mit der gegenüberstehenden Fläche (72) in Kontakt gebracht werden kann.

2. Stoßdämpfer gemäß Anspruch 1, wobei eine Höhendifferenz aus Konkavitäten und Konvexitäten (35), die durch die Satinoberfläche erlangt werden, auf 0,5 µm oder mehr und 500 µm oder weniger festgelegt ist.

3. Stoßdämpfer mit
einem Kolben (50), der eine hin- und hergehende Bewegung ausführt,
einem Gehäuse (60),
einem Führungselement (70), und
einer Öldichtung (10), die an einem Ende des Gehäuses (60) fixiert ist, um einen Bereich auszubilden, in welchem Öl abgedichtet wird;
wobei die Öldichtung (10) einen Dichtungskörper (30) aufweist; wobei der Dichtungskörper (30) eine Hauptlippe (32) und eine Staublippe (33) zum Gleiten in Kontakt mit einer Fläche des Kolbens (50) und eine Rückschlagventillippe (31) in Kontakt mit einer gegenüberstehenden Fläche (72) des Führungselementes (70), die an einer Position vorgesehen ist, die der Rückschlagventillippe (31) gegenübersteht, aufweist,
wobei die Rückschlagventillippe (31) so aufgebaut ist, dass sie mit der gegenüberstehenden Fläche (72) in einer derartigen Weise in Kontakt steht, dass ein Endstück (31a) der Rückschlagventillippe (31) gebogen ist und gitterartige Konvexitäten an dem gesamten Bereich einer Fläche der Rückschlagventillippe (31) vorgesehen sind, die in Kontakt mit der gegenüberstehenden Fläche (72) gebracht werden kann.

## Revendications

1. Amortisseur de chocs ayant
un piston (50) effectuant un mouvement de va-et-vient, un boîtier (60),
un élément de guidage (70), et
un joint d'huile (10) fixé à une extrémité du boîtier (60) pour former une zone dans laquelle l'huile est scellée ;
dans lequel ledit joint d'huile (10) comprend un corps de joint (30) ;
dans lequel ledit corps de joint (30) comprend une lèvre principale (32) et une lèvre anti-poussière (33) pour coulisser en contact avec une surface dudit piston (50), et une lèvre (31) de clapet antiretour en contact avec une face opposée (72) dudit élément de guidage (70) prévu au niveau d'une position opposée à la lèvre (31) du clapet antiretour,
dans lequel la lèvre (31) du clapet antiretour est construite de manière à être en contact avec la face opposée (72) de telle sorte qu'une pointe (31a) de la lèvre (31) du clapet antiretour soit pliée et une finition satinée est prévue à l'aire totale d'une surface de la lèvre (31) du clapet antiretour qui peut être mise en contact avec la face opposée (72).

2. Amortisseur de chocs selon la revendication 1 dans lequel une différence de hauteur des concavités et des convexités (35) obtenues par la finition satinée est fixée à 0,5 µm ou plus et 500 µm ou moins.

3. Amortisseur de chocs ayant
un piston (50) effectuant un mouvement de va-et-vient,
un boîtier (60),
un élément de guidage (70), et
un joint d'huile (10) fixé à une extrémité du boîtier (60) pour former une zone dans laquelle l'huile est scellée ;
dans lequel ledit joint d'huile (10) comprend un corps de joint (30) ;
dans lequel ledit corps de joint (30) comprend une lèvre principale (32) et une lèvre anti-poussière (33) pour coulisser en contact avec une surface dudit piston (50), et une lèvre (31) du clapet antiretour en contact avec une face opposée (72) dudit élément de guidage (70) prévu au niveau d'une position opposée à la lèvre (31) du clapet antiretour,
dans lequel la lèvre (31) du clapet antiretour est construite de manière à être en contact avec la face opposée (72) de telle sorte qu'une pointe (31a) de la lèvre (31) du clapet antiretour soit pliée et des convexités en forme de grille sont prévues à l'aire totale d'une surface de la lèvre (31) du clapet antiretour qui peut être mise en contact avec la face opposée (72).
